Europäisches Patentamt

European Patent Office

Office européen des brevets

(19)

(11) **EP 0 760 990 B1**

(12) **EUROPÄISCHE PATENTSCHRIFT**

(45) Veröffentlichungstag und Bekanntmachung des Hinweises auf die Patenterteilung:
**29.09.1999 Patentblatt 1999/39**

(21) Anmeldenummer: **93915855.6**

(22) Anmeldetag: **08.07.1993**

(51) Int Cl.⁶: **G08C 25/00**

(86) Internationale Anmeldenummer:
**PCT/EP93/01791**

(87) Internationale Veröffentlichungsnummer:
**WO 94/01846 (20.01.1994 Gazette 1994/03)**

(54) **EINRICHTUNG, INSBESONDERE IN FAHRZEUGEN, ZUM LEITUNGSGEBUNDENEN ÜBERTRAGEN VON ELEKTRISCHEN SIGNALEN**

ARRANGEMENT, IN PARTICULAR IN VEHICLES, FOR TRANSMITTING ELECTRIC SIGNALS BY CONNECTING LINES

AGENCEMENT, NOTAMMENT DANS DES VEHICULES A MOTEUR, DE TRANSMISSION DE SIGNAUX ELECTRIQUES PAR LIGNES DE TRANSMISSION

(84) Benannte Vertragsstaaten:
**DE ES FR GB IT NL SE**

(30) Priorität: **08.07.1992 DE 4222320**

(43) Veröffentlichungstag der Anmeldung:
**12.03.1997 Patentblatt 1997/11**

(73) Patentinhaber: **AMI DODUCO GmbH
75181 Pforzheim (DE)**

(72) Erfinder:
• **NORMANN, Norberg
D-75223 Niefern-Öschelbronn (DE)**
• **SCHULZE, Lothar
D-75228 Ispringen (DE)**

• **UHL, Günter
D-74921 Helmstadt-Bargen (DE)**
• **NEY, Joachim
D-75223 Niefern-Öschelbronn (DE)**

(74) Vertreter: **Twelmeier, Ulrich, Dipl. Phys. et al
porta patentanwälte
Dipl.-Phys. U. Twelmeier
Dr. techn. W. Leitner
Zerrennerstrasse 23-25
75172 Pforzheim (DE)**

(56) Entgegenhaltungen:
**EP-A- 0 433 514         GB-A- 2 215 893
US-A- 3 721 958**

**Beschreibung**

Die Erfindung geht aus von einer Einrichtung mit den im Oberbegriff des Anspruchs 1 angegebenen Merkmalen. Eine solche Einrichtung ist aus der EP 0 451 445A2 bekannt. In Türen von Automobilen sind heutzutage eine ganze Anzahl von elektrischen Verbrauchern untergebracht, die mit Gleichstrom und elektrischen Steuersignalen versorgt werden müssen, beispielsweise Fensterheber, verstellbare Außenspiegel, Außenspiegelheizung, Warnlicht, Türschließkontakte, Kontakte für Innenraumbeleuchtung, Lautsprecher, Zentralverriegelung, evtl. auch eine Bedieneinheit für ein elektrisches Schiebedach. In herkömmlicher Schaltungstechnik benötigt man dafür bis zu 40 Leitungen. Das stellt jedoch ein erhebliches Problem für die Montage der Türen dar und erschwert Reparaturen an der Tür, da die Leitungen nicht nur teils in der Tür und teils in der übrigen Karosserie verlegt, sondern auch vom Fahrzeugrahmen mittels eines flexiblen Kabelbaumes in die jeweilige Tür hineingeführt werden müssen. Hinzu kommt, daß die meisten Leitungen einen Laststrom führen und demgemäß einen hinreichend großen Leitungsquerschnitt haben müssen. In Anbetracht der Tatsache, daß die Zahl der elektrischen Leitungen in Kraftfahrzeugen in den letzten Jahren sehr stark angestiegen ist (ein moderner Mittelklassewagen enthält größenordnungsmäßig 1000 m Kabel), haben die Automobilbauer inzwischen ernste Probleme, die umfangreichen Kabelbäume im Fahrzeug unterzubringen.

Hinzu kommt, daß mit zunehmender Anzahl der Kabel auch die Zahl der Steckverbinder zunimmt, die man benötigt, um eine Tür ein- und ausbauen zu können. Die meisten Betriebsstörungen in der Kfz-Elektronik und Elektrik werden durch Kontaktprobleme in den Steckverbindem der Kabelbäume hervorgerufen. Kontaktprobleme werden durch das Eindringen von Feuchtigkeit oder aggressiven Stoffen in die Steckverbinder, zumal in Kraftfahrzeugen, begünstigt. Besonders häufig sind Informationsleitungen mit geringen Signalströmen betroffen, da hier - anders als bei Steckverbindem, über welche Lastströme fließen - praktisch keine Selbstreinigung der Kontaktoberflächen stattfindet.

Aus der EP 0 183 580 A1 ist es bekannt, bei der Übertragung von elektrischen Signalen zwischen der Lenksäule und ihrem Führungsrohr in einem Fahrzeug anstelle eines Schleifringübertragers einen induktiven Übertrager vorzusehen.

Der vorliegenden Erfindung liegt die Aufgabe zugrunde, die mit dem gewachsenen Verkabelungsaufwand in Fahrzeugen einhergehende Anfälligkeit für Betriebsstörungen zu reduzieren.

Diese Aufgabe wird gelöst durch eine Einrichtung mit den im Anspruch 1 angegebenen Merkmalen und durch ein Scharnier für Fahrzeugtüren mit den im Anspruch 31 angegebenen Merkmalen und durch die Verwendung einer induktiven Steckverbindung in Fahrzeugen mit den im Anspruch 32 angegebenen Merkmalen. Vorteilhafte Weiterbildungen der Erfindung sind Gegenstand der abhängigen Ansprüche.

Erfindungsgemäß wird im Fahrzeug an Stellen, an denen bisher Steckverbinder mit direkter elektrischer Kontaktgabe eingesetzt werden, statt dessen ein Steckverbinder mit transformatorischer Kopplung vorgesehen, um elektrische Signale zu übertragen. Damit sind nicht nur mit einem Schlag sämtliche Kontaktprobleme mit den bisherigen Steckverbindem beseitigt, sondern es ist zugleich die Möglichkeit eröffnet, den Verkabelungsaufwand drastisch zu verringern, weil man für die transformatorische Signalübertragung in den Steckverbindem ein Wechselstromsignal benötigt und dieses als Trägersignal verwendet werden kann, welchem man nicht nur eines, sondem mehrere unterschiedliche Signale aufmodulieren kann, um sie in die Tür zu übertragen. Grundsätzlich genügt nur eine Zweidrahtleitung, um alle vorkommenden Signale in die Tür zu übertragen. Dazu wird ein Teil des Steckverbinders an der Fahrzeugtür angebracht und das andere Teil des Steckverbinders an einem anderen Teil der Karosserie (Fahrzeugrahmen). Damit ist eine zuverlässige Signalübertragung möglich bei Fahrzeugtüren, die schwenkbar gelagert in Scharnieren aufgehängt sind, denn wenn der Steckverbinder an jener Seite der Tür angeordnet wird, an welcher sie am Fahrzeugrahmen angeschlagen ist, dann bleiben die beiden Teile des Steckverbinders auch bei Schwenkbewegungen der Tür in einer vorgegebenen, eng benachbarten räumlichen Zuordnung, welche eine intensive Kopplung gewährleistet. Es ist sogar möglich, eines der Türscharniere selbst als Steckverbinder auszubilden. Für Signale, die auf diese Weise induktiv in die Tür übertragen werden, benötigt man zwischen der Tür und dem Fahrzeugrahmen überhaupt keine elektrische Leitung mehr, wodurch die Verkabelung entscheidend erleichtert und die Reparaturfreundlichkeit der Tür wesentlich verbessert wird.

Erfindungsgemäss lassen sich in eine Tür nicht nur Steuersignale für in der Tür angeordnete Verbraucher und deren Stellelemente übertragen, sondern auch NF-Signale, die von einem Autoradio oder einer anderen Audio-Anlage im Fahrzeug zu einem in der Tür vorgesehenen Lautsprecher zu übertragen sind. Zu diesem Zweck werden die NF-Signale ebenso wie die Steuersignale einem Wechselstrom-Trägersignal aufmoduliert, welches dann im Steckverbinder induktiv übertragen wird und aus welchem mit Hilfe einer in der Tür vorgesehenen Schaltungsanordnung (Türmodul) die Steuersignale und die NF-Signale durch Demodulation zurückgewonnen werden können. Ein besonderer Vorteil der Erfindung liegt darin, dass nicht nur schwache Steuersignale und NF-Signale übertragen werden können, sondern dass auch die für die Betätigung der elektrischen Verbraucher in der Tür erforderliche elektrische Leistung auf diesem Wege übertragen werden kann, so dass überhaupt keine Leitungsverbindung zwischen der Tür und dem Fahrzeugrahmen mehr erforderlich ist. Für die Übertragung der elektrischen Leistung kann man das Trägersignal heranziehen, dessen Amplitude man hinreichend hoch wählt, um dem erforderlichen Leistungsbedarf von größenordnungsmässig 50 W zu entsprechen; führt man das Trägersignal nach dem Demodulator auf einen Gleichrichter, dann kann dieser als Stromquelle für die Verbraucher dienen, denen auch die Signale zugeführt werden.

Befinden sich - wie es in Fahrzeugen der gehobenen Mittelklasse und der Oberklasse heute üblich ist - in der Tür mehrere elektrische Verbraucher, die es erforderlich machen, dass mehrere Steuersignale in die Tür übertragen werden, dann werden diese zweckmässigerweise als serieller Daten-Bus auf das gemeinsame Trägersignal aufmoduliert und mit diesem in die Tür übertragen, dort frequenzmässig nach NF-Audio- und Steuersignalen getrennt und an ihre vorbestimmten Verbraucher weitergeleitet.

Steuersignale in Form eines seriellen Daten-Bus zu übertragen ist in der Automobiltechnik an sich bereits bekannt, z.B. bei der elektronischen Motorsteuerung, jedoch noch nicht zur Übertragung von Steuersignalen in eine Tür. Erfindungsgemäss wird jedoch nicht nur ein serieller Daten-Bus benutzt, sondern dieser zusätzlich kombiniert mit Steckverbindern, in welchen NF-Signale, insbesondere Audiosignale, induktiv übertragen und zu diesem Zweck auf einen gemeinsamen Träger aufmoduliert werden. Dafür benötigt man im Fahrzeug ausserhalb der Tür ein Bus-Steuergerät, welches das modulierte Trägersignal erzeugt und überträgt, und in der Tür benötigt man eine Schaltungsanordnung für den Empfang dieses Signales, nachfolgend als Türmodul bezeichnet, in welchem das Signal demoduliert und in die Steuersignale und NF-Signale getrennt wird. Vom Türmodul aus werden die in der Tür vorhandenen Verbraucher versorgt.

Es kommt auch vor, dass in einer Tür Schalter oder andere Bedienelemente sind, mit denen Verbraucher betätigt werden, die nicht in derselben Tür, sondern ausserhalb der Tür oder in einer anderen Tür liegen. So kann von der Fahrertür aus der Rückspiegel an der Beifahrertür verstellt und/oder die Zentralverriegelung betätigt werden. In vorteilhafter Weiterbildung der Erfindung ist deshalb vorgesehen, dass auch in einer Tür erzeugte, für elektrische Verbraucher ausserhalb der Tür bestimmte Steuersignale ebenfalls dem Trägersignal aufmoduliert und dann aus der Tür heraus induktiv übertragen werden zu einem anderen Türmodul, vorzugsweise über ein Bus-Steuergerät, an welches alle Türmodule angeschlossen sind. Auf diese Weise ist ein bidirektionaler Datenverkehr zwischen den Türmodulen und dem zentralen Bus-Steuergerät möglich, bidirektional natürlich nur für die Steuersignale, nicht aber für NF-Audiosignale, für die das nicht benötigt wird.

Für die Auswahl des Trägersignals und des Modulationsverfahrens gibt es verschiedene Möglichkeiten. So kann man als Trägersignal ein z.B. sinusförmiges oder sinusähnliches Wechselspannungssignal verwenden, vorzugsweise mit einer Frequenz zwischen 80 kHz und 120 kHz, welchem NF-Signale (Frequenzbereich ca. 30 Hz bis 18 kHz) durch Frequenzmodulation aufmoduliert werden. Für die Übertragung der binär codierten Steuersignale bedient man sich in diesem Fall vorzugsweise auch der Frequenzmodulation und moduliert dem Trägersignal zweckmässigerweise oberhalb des für die Audio-Übertragung verwendeten Frequenzbandes zwei diskrete Frequenzen für die Symbole "0" und "1" auf.

Modems in Gestalt integrierter Schaltkreise, die Signale als seriellen Datenbus nach dem Verfahren der Freqzuenz-Stift-Kodierung (FSK) übertragen, sind im Handel erhältlich und für Zwecke der Erfindung geeignet (z.B. Typ ST 7537 von SGS Thomson).

Eine andere vorteilhafte Möglichkeit besteht darin, ein rechteckförmiges Trägersignal zu verwenden. Wird das rechteckförmige Trägersignal in der Tür gleichgerichtet, erhält man im Idealfall eine lückenfreie Gleichspannung, die ohne großen Aufwand zur Stromversorgung der Verbraucher in der Tür herangezogen werden kann. In diesem Fall erfüllt das Trägersignal eine doppelte Funktion: Zum einen dient es als Informationsträger, zum anderen überträgt es die Energie, welche die Verbraucher in der Tür benötigen, um zu arbeiten. Eine gesonderte Leitung zur Energieübertragung kann deshalb entfallen. Das rechteckförmige Trägersignal kann frequenzmoduliert oder auch amplitudenmoduliert werden, vorzugsweise wird es pulsbreitenmoduliert, um NF-Audiosignale zu übertragen. Der dafür erforderliche maximale Modulationshub kann beispielsweise durch Änderung des Tastverhältnisses von 0,7 bis 1,3 verwirklicht werden. Auch bei Verwendung eines rechteckförmigen Trägersignals wird eine Frequenz von ungefähr 80 kHz bis 120 kHz für das Trägersignal bevorzugt. Damit ist die Samplefrequenz rund 10 mal so hoch wie die NF-Audiofrequenz, was für eine einwandfreie NF-Übertragung mehr als ausreichend ist. Die hohe Samplefrequenz ermöglicht eine besonders einfache Modulation und Demodulation.

Im Falle eines rechteckförmigen Trägersignals werden die binär codierten Steuersignale dem Trägersignal vorzugsweise durch Amplitudenmodulation aufgeprägt. Dazu wird der rechteckige Spannungsverlauf des Trägersignals während einer Periode vorzugsweise als "Leer-Rahmen" für ein zu übertragendes Bit einer Serie von Bits benutzt. Damit ist, wie weiter hinten noch beschrieben wird, leicht eine Codierung von vier verschiedenen Zuständen in jeder Übertragungsperiode möglich.

Die beiden Teile des induktiven Steckverbinders, über welchen die Signale in die Tür übertragen werden, greifen vorzugsweise scharnierartig ineinander oder bilden ein Türscharnier, welches als drittes Türscharnier zwischen den beiden für das Tragen der Tür ohnehin vorhandenen Türscharniere angeordnet sein kann, vorzugsweise jedoch eines der beiden Türscharniere ersetzt und somit nicht nur die herkömmliche mechanisch-tragende Funktion, sondern auch eine induktive Übertragungsfunktion hat. In dieser Ausprägung ist die Erfindung besonders preiswert und montagefreundlich.

Ein als Scharnier ausgebildeter Steckverbinder ist zweckmässigerweise ein Transformator, dessen Primärwicklung am Rahmen des Fahrzeugs und dessen Sekundärwicklung an der Tür angebracht ist und einen ferromagnetischen Scharnierbolzen umschließt, der in ein am Rahmen angebrachtes ferromagnetisches Joch eingreift, welches den magnetischen Kreis zwischen Primärwicklung und Sekundärwicklung schließt. Damit der Scharnierbolzen nicht nur seiner elekromagnetischen Aufgabe, sondern auch seiner mechanisch tragenden Funktion als Scharnierteil gerecht wird, besteht er aus einem längs geschlitzten Rohr aus nicht magnetischem Stahl, z.B. aus V2A, mit einem weichmagnetischen Kern. Eine andere Möglichkeit ist, den Scharnierbolzen aus einem verlustarmen Metallband aus einem amorphen Material zu wickeln. Das Joch besteht am besten aus einem Ferrit, kann aber auch aus amorphem Material bestehen.

Die Erfindung ist nicht darauf beschränkt, Signale in eine Fahrzeugtür zu übertragen. Die Erfindung kann vielmehr überall dort angewendet werden, wo Schwachstromsignale leitungsgebunden von einem Sender über Zweidrahtleitungen zu einem Empfänger übertragen werden und zwischen Sender und Empfänger wenigstens ein Steckverbinder vorgesehen ist, der Kontaktprobleme machen kann. Der Sender kann z.B. ein Steuergerät, ein Signalgeber oder ein Schaltgerät sein, welches eine Stromquelle zuschaltet. Der Empfänger kann ein beliebiger elektrischer Verbraucher sein, z.B. ein Stellmotor oder ein anderes Stellgerät, ein Signalgeber, ein Lautsprecher, ein Schaltgerät oder ein steuerbarer Sensor. In allen diesen Fällen können Signale vom Sender zum Empfänger über Zweidrahtleitungen übertragen werden, die durch Spulen abgeschlossen sind, welche im Steckverbinder transformatorisch miteinander gekoppelt sind, nicht aber durch direkte Kontaktgabe zwischen elektrischen Kontaktstückpaaren. Neben der Anwendung in Kraftfahrzeugen kann die Erfindung auch in Baumaschinen, Boden- und Luftfahrzeugen angewendet werden. Stationäre Einsatzmöglichkeiten bieten sich in der Haustechnik, in der Prozeßtechnik und in der Maschinen-Steuerungstechnik.

Im Steckverbinder ist für eine ausreichende induktive Kopplung zwischen den Spulen zu sorgen, welche die miteinander zu verbindenden Zweidrahtleitungen abschließen. Das geschieht zweckmässigerweise dadurch, dass man die Spulen in an sich bekannter Weise durch einen Flußleitkörper aus ferromagnetischem Material, insbesondere aus einem Ferrit, miteinander verbindet, insbesondere dadurch, dass man die Spulen auf einem Ferritkern anordnet. Vorzugsweise enthält der Steckverbinder einen geteilten Flußleitkörper, von welchem ein erster Teil im einen Teil des Steckverbinders liegt und wenigstens eine Spule aufnimmt und ein zweiter Teil des Flußleitkörpers im anderen Teil des Steckverbinders liegt und wenigstens eine weitere Spule aufnimmt, wobei die beiden Teile des Flußleitkörpers sich zu einem die Spulen durchsetzenden Kern, vorzugsweise mit magnetischem Rückschlußteil auf der Spulenaussenseite, ergänzen. Dabei ist es ein wesentlicher Vorteil der Erfindung, dass die beiden Teile des Steckverbinders sogar gleich ausgebildet sein können.

Ändert man die Orientierung einer Spule auf dem Kern, so ändert man damit die Signalpolarität. In manchen Anwendungsfällen mag das vorteilhaft sein. In Fällen, wo die Signalpolarität festgelegt ist, sorgt man zweckmässigerweise durch eine entsprechende Anpassung der Formgestalt der Spule bzw. des Spulenkörpers und des Flußleitstücks dafür, dass die Spule nur in einer Orientierung auf das Flußleitstück aufgeschoben werden kann.

Mit Hilfe eines erfindungsgemässen Steckverbinders können nicht nur zwei, sondern auch mehr als zwei Zweidrahtleitungen miteinander verbunden werden, indem man den Steckverbinder so ausbildet, dass auf das Flußleitstück im einen und/oder anderen Teil des Steckverbinders nicht nur jeweils eine, sondern jeweils zwei oder mehr als zwei Spulen angeordnet werden können. Auf diese Weise lassen sich sehr einfach Verzweigungen, aber auch redundante Signalleitungssysteme aufbauen, letzteres z.B. in der Weise, dass man zwei Zweidrahtleitungen von einem zwei Spulen enthaltenden gemeinsamen Teil eines Steckverbinders ausgehen und in einem zwei weitere Spulen enthaltenden gemeinsamen Teil eines anderen Steckverbinders enden läßt.

Die erforderliche induktive Kopplung zwischen den beiden Teilen eines erfindungsgemässen Steckverbinders erfordert nicht zwangsläufig, dass die in den beiden Teilen des Steckverbinders vorgesehenen Flußleitstücke bei zusammengefügtem Steckverbinder direkt miteinander Kontakt machen, vielmehr kann zwischen den beiden auch ein Spalt bestehen, der allerdings Streuverluste zur Folge hat. Der Spalt muss nicht ein Luftspalt sein, sondern kann auch dadurch zustande kommen, dass zwischen den beiden Teilen des Flußleitkörpers eine Schicht aus nichtmagnetischem, elektrisch nichtleitendem Material, z.B. aus einem Kunststoff, liegt. Das ermöglicht z.B. eine Ausbildung des Steckverbinders, in welcher dessen beide Teile nicht formschlüssig und/oder kraftschlüssig ineinander greifen, vielmehr kann man auch die beiden Teile des Steckverbinders mit einander zugewandten ebenen Flächen ausstatten, welche keinen gegenseitigen Eingriff ermöglichen, und die beiden Teile durch eine äussere Halterung zusammenhalten. Auch eine solche Ausbildung wollen wir als Steckverbinder verstanden wissen. Es könnte sich bei der Halterung z.B. um eine aufgeschrumpfte Hülle aus schrumpffähigem Kunststoff handeln, die die beiden Teil des Steckverbinders nicht nur zusammenhält, sondern gleichzeitig staub- und feuchtigkeitsdicht umschließt. Ausführungsbeispiele sind in den beigefügten Zeichnungen dargestellt. Gleiche oder einander entsprechende Teile sind in den Figuren teilweise mit übereinstimmenden Bezugszahlen bezeichnet.

Figur 1      ist ein Blockschaltbild der Schaltungsanordnung,

Figur 2    zeigt als Detail zu dem Blockschaltbild aus Figur 1 eine Schaltungsanordnung zur Energieübertragung mittels des Trägersignals,

Figur 3    zeigt dazu den Verlauf der Spannung eines rechteckförmigen Trägersignals auf der Primärseite eines Transformators,

Figur 4    zeigt dazu den Stromverlauf des Trägersignals,

Figur 5    zeigt dazu den Spannungsverlauf des Trägersignals auf der Sekundärseite des Transformators,

Figur 6    zeigt die durch Gleichrichtung des Trägersignals aus Figur 5 gewonnene Gleichspannung zur Versorgung der Verbraucher in der Tür,

Figur 7    zeigt als Detail zum Blockschaltbild gemäss Figur 1 eine Schaltungsanordnung in Blockdarstellung zur Übertragung eines NF-Audiosignals,

Figur 8    zeigt den zeitlichen Verlauf eines NF-Audiosignals,

Figur 9    zeigt eine Sägezahnspannung, mit welcher das NF-Audiosignal gemäss Figur 8 gesampled wird,

Figur 10    zeigt das als Ergebnis des Abtastens des NF-Audiosignals gewonnene pulsbreitenmodulierte Rechtecksignal auf der Primärseite des Transformators,

Figur 11    zeigt das zugehörige pulsbreitenmodulierte Rechtecksignal auf der Sekundärseite des Transformators,

Figur 12    zeigt eine Folge von Gleichspannungsimpulsen, die durch die Schaltungsanordnung in Figur 14 gewonnen werden und deren Amplitude das Tastverhältnis des Rechtecksignals aus Figur 11 wiederspiegelt,

Figur 13    zeigt den Verlauf eines NF-Audiosignals, welches durch Tiefpassfilterung aus dem Signal gemäss Figur 12 zurückgewonnen wurde,

Figur 14    zeigt als Detail zu Figur 1 eine Schaltung zum Empfang und zur Verarbeitung des pulsbreitenmodulierten Signals aus Figur 10,

Figur 15    zeigt ein zur Übertragung von binär codierten Steuersignalen moduliertes Trägersignal,

Figur 16    zeigt als Detail zu Figur 1 eine Schaltungsanordnung zum Übertragen von binär codierten Steuersignalen,

Figur 17    zeigt die Teile eines als Türscharnier ausgebildeten induktiven Steckverbinder in der Draufsicht,

Figur 18    zeigt die Elemente des Steckverbinders aus Figur 17 in einer Seitenansicht, teilweise im Schnitt,

Figur 19    zeigt schematisch eine Übertragungseinrichtung mit induktivem Steckverbinder für weitere Anwendungen,

Figur 20    zeigt ein Übertragungssystem mit einem induktiven Steckverbinder, der eine Verzweigung ermöglicht,

Figur 21    zeigt ein Übertragungssystem mit induktiven Steckverbindern und redundanter Leitungsführung, und

Figur 22    zeigt eine Übertragungseinrichtung mit aneinander gelegten Teilen eines induktiven Verbinders.

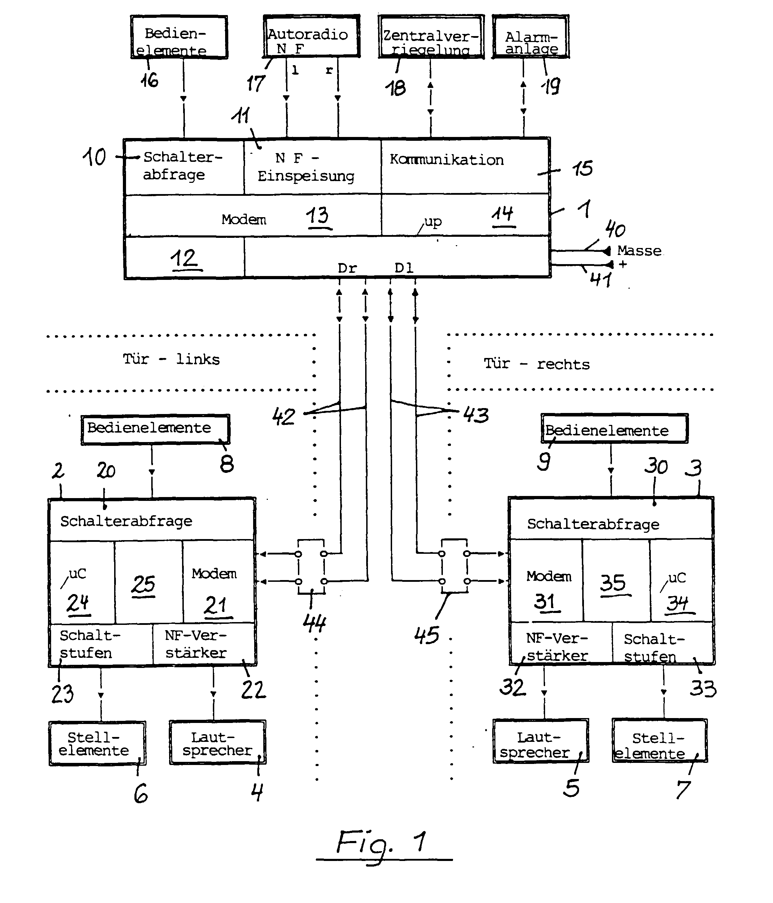

Die Schaltungsanordnung in Figur 1 enthält ein Bus-Steuergerät 1, welches im Fahrzeug an einer Stelle ausserhalb der Türen, z.B. hinter dem Armaturenbrett, angeordnet ist, sowie einen Türmodul 2 in einer linken Tür und einen Türmodul 3 in einer rechten Tür. Beide Türen enthalten einen Lautsprecher 4 bzw. 5 und Stellelemente 6 bzw. 7 für unterschiedliche Verbraucher, insbesondere für die Verstellung der Aussenspiegel, für Fensterheber und für eine Zentralverriegelung. Ausserdem sind an jeder Tür diverse Bedienelemente 8 bzw. 9 angebracht.

Das Bus-Steuergerät 1 enthält eine Abfrageeinheit 10 zum Abfragen der Stellung von Schaltern und anderen ausserhalb der Türen angeordneten Bedienelementen 16, eine mit einem Autoradio 17 verbundene Schaltung 11 zum Einspeisen der auf zwei Kanälen (rechter und linker Stereokanal) vom Autoradio 17 gelieferten NF-Audiosignale, einen Frequenzgenerator 12 zum Erzeugen eines Wechselspannungs-Trägersignals mit einer Frequenz von ca. 100 kHz, einen Modulator/Demodulator 13 (Modem), einen die Abläufe im Bus-Steuergerät steuernden Mikroprozessor 14 und eine Schaltung 15 für den Austausch von Informationen zwischen dem Bus-Steuergerät 1 und einer Zentralverriegelungsanlage 18 und einer Alarmanlage 19.

Die Türmodule enthalten ebenfalls eine Abfrageeinheit 20 bzw. 30 zum Abfragen der Stellung von Schaltern und anderen Bedienelementen in der jeweiligen Tür, einen Modulator/Demodulator 21 bzw. 31 (Modem), einen NF-Verstärker 22 bzw. 32, Schaltstufen 23 bzw. 33 zum Umsetzen der demodulierten Steuersignale in Stellsignale für in der betreffenden Tür vorgesehene Stellelemente 6 bzw. 7 von elektrischen Verbrauchern, einen Mikro-Controller 24 bzw. 34, welcher die Abläufe im Türmodul 20 bzw. 30 steuert, sowie einen Gleichrichter 25 bzw. 35, um aus dem Trägersignal durch Gleichrichten einen Gleichstrom zur Energieversorgung der Verbraucher zu gewinnen.

Das Bus-Steuergerät 1 ist über eine Masseleitung 40 und eine demgegenüber Spannung führende Leitung 41 an eine Stromquelle (Fahrzeugbatterie) angeschlossen. Von einem Datenausgang D1 des Bus-Steuergerätes 1 führt ein Datenleitungspaar 42 über einen Koppler 44 in die linke Tür und von einem Datenausgang Dr ein Datenleitungspaar 43 über einen Koppler 45 in die rechte Tür.

Die Koppler 44 und 45 sind als Türscharniere ausgebildete Steckverbinder und haben den in den Figuren 14 und 15 dargestellten Aufbau. Die eine Scharnierhälfte 50 hat ein gabelförmiges Trägerblech 51 mit schlechter magnetischer Leitfähigkeit, z.B. aus V2A-Stahl, welches am Fahrzeugrahmen befestigt ist. An den beiden Schenkeln 52 und 53 des Trägerblechs 51 ist jeweils ein Joch 54 befestigt, welches aus einem ferromagnetischen Werkstoff besteht, z. B. aus einem Ferrit oder aus einem amorphen Metall. An ihrem einen Ende sind die Joche 54 durch einen zylindrischen ferromagnetischen Kern 55 miteinander verbunden, welcher eine elektrische Wicklung 56 trägt. Die Schenkel 52 und 53 sind zu einem Haken 57 gebogen, welcher das entsprechend der Kontur des Hakens gerundete andere Ende des Jochs 54 aufnimmt, in welchem sich eine Querbohrung 58 befindet, die zur Aufnahme eines Scharnierbolzens 59 dient, der bevorzugt aus einem längs geschlitzten nichtmagnetischen Rohr (z.B. aus V2A-Stahl) mit weichmagnetischem Kern besteht und gleichzeitig als Kern einer weiteren elektrischen Wicklung 66 dient, welche in der zweiten Scharnierhälfte 60 angeordnet ist. Die zweite Scharnierhälfte besteht aus einem Trägerblech 61 mit schlechter magnetischer Leitfähigkeit und ist an der Tür befestigt. Das Trägerblech 61 ist zu einer nicht ganz geschlossenen zylindrischen Buchse 62 gebogen, welche die Wicklung 66 aufnimmt. Damit die Wicklung 66 nicht die gesamten mechanischen Kräfte, die vom Scharnierbolzen 59 übertragen werden, aufnehmen muss, befinden sich an den beiden Enden der Wicklung 66 Lagerbuchsen 63 und 64 aus Stahl, welche zusammen mit der Wicklung 66 eine Einheit bilden und zur Vermeidung einer Kurzschlußwindung längs geschlitzt sind.

Wenn die Tür montiert wird, wird die Scharnierhälfte 60 in die gabelförmige Scharnierhälfte 50 eingeführt, so dass die Bohrung 65 der Wicklung 66 mit den Bohrungen 58 im Joch 54 fluchtet, und dann wird der Bolzen 59 zur Verbindung der beiden Scharnierhälften in die Bohrungen 58 und 65 eingeführt. Der Bolzen 59 überträgt die mechanischen Kräfte im wesentlichen auf die Lagerbuchsen 63 und 64. Nachdem die Tür montiert ist, sind die beiden Wicklungen 56 und 66 durch einen magnetischen Kreis, bestehend aus den beiden Jochen 54, dem Kern 55 und dem Bolzen 59 miteinander gekoppelt und bilden einen Transformator mit Primärwicklung 56 und Sekundärwicklung 66.

Die Schaltungsanordnung arbeitet wie folgt:

Durch die Abfrageeinheit 10 des Bus-Steuergerätes 1 werden die diesem zugeordneten Bedienelemente 16 zyklisch abgefragt; binär codierte Steuersignale, die den durch die Abfrage ermittelten Schaltstellungen entsprechen, werden durch das Modem 13 auf das vom Frequenzgenerator 12 gelieferte Trägersignal aufmoduliert und je nach der codierten Bestimmung in die rechte Tür oder in die linke Tür oder in beide Türen übertragen. Ist das Autoradio 17 eingeschaltet, werden die vom Autoradio stammenden und für die Türlautsprecher 4 und 5 bestimmten NF-Signale in das Bus-Steuergerät 1 eingespeist und ebenfalls durch das Modem 13 auf das Trägersignal aufmoduliert, wobei im Falle von Stereosignalen der linke Kanal über das Datenleitungspaar 42 zum Türmodul 2, der rechte Kanal über das Datenleitungspaar 43 zum Türmodul 3 übertragen wird. Bei Mono-NF-Signalen werden von den Datenleitungspaaren 42 und 43 übereinstimmende NF-Signale übertragen.

Die in den Türmodulen ankommenden Signale werden empfangen, im Modem 21 bzw. 31 demoduliert und frequenzmässig getrennt. Die NF-Signale werden durch einen NF-Verstärker 22 bzw. 32 verstärkt und an den Türlautsprecher 4 bzw. 5 übermittelt. Die demodulierten Steuersignale werden vom Mikro-Controller 24 bzw. 34 ausgewertet und steuern über Schaltstufen 23 und 33 die verschiedenen Stellelemente 6 bzw. 7. Das Trägersignal wird im Gleichrichter 25 bzw. 35 gleichgerichtet und liefert auf diese Weise ein Gleichstromsignal für das Betreiben der Verbraucher in der Tür.

Die Abfrageeinheiten 20 und 30 in den beiden Türmodulen 2 bzw. 3 fragen ihrerseits zyklisch die Stellung der in derselben Tür vorgesehenen Bedienelemente 8 und 9 ab und liefern binär codierte Steuersignale, die die abgefragten Stellungen wiedergeben. Der Mikro-Controller 24 bzw. 34 prüft, ob das abgefragte Bedienelement zu einem Stellelement in derselben Tür oder zu einem Stellelement ausserhalb derselben Tür gehört; gehört es zu einem Stellelement in derselben Tür, wird das Stellelement durch das zugehörige Steuergerät ohne Umweg über das Bus-Steuergerät 1 über die Schaltstufe 23 bzw. 33 angesteuert. Gehört z.B. das abgefragte Bedienelement 8 der linken Tür zu einem Stellelement 7 in der rechten Tür, dann wird das von der Abfrageeinheit 20 gelieferte binär codierte Steuersignal im Modem 21 auf das Trägersignal aufmoduliert, in das Bus-Steuergerät 1 übertragen, dort demoduliert, bewertet, erneut auf das Trägersignal moduliert und in die rechte Tür übertragen, dort im Modem 31 demoduliert und steuert über die Schaltstufe 33 das Stellelement 7.

Das Bus-Steuergerät 1 kann ferner z.B. vom Kofferraumschloss, welches Bestandteil der Zentralverriegelung 18 ist, Signale empfangen und an die beiden Türmodule 2 und 3 weiterleiten. Ausserdem können von den Türmodulen über das Bus-Steuergerät 1 Signale an eine Alarmanlage 19 und umgekehrt von der Alarmanlage an die Türmodule 3 und 4 übermittelt werden.

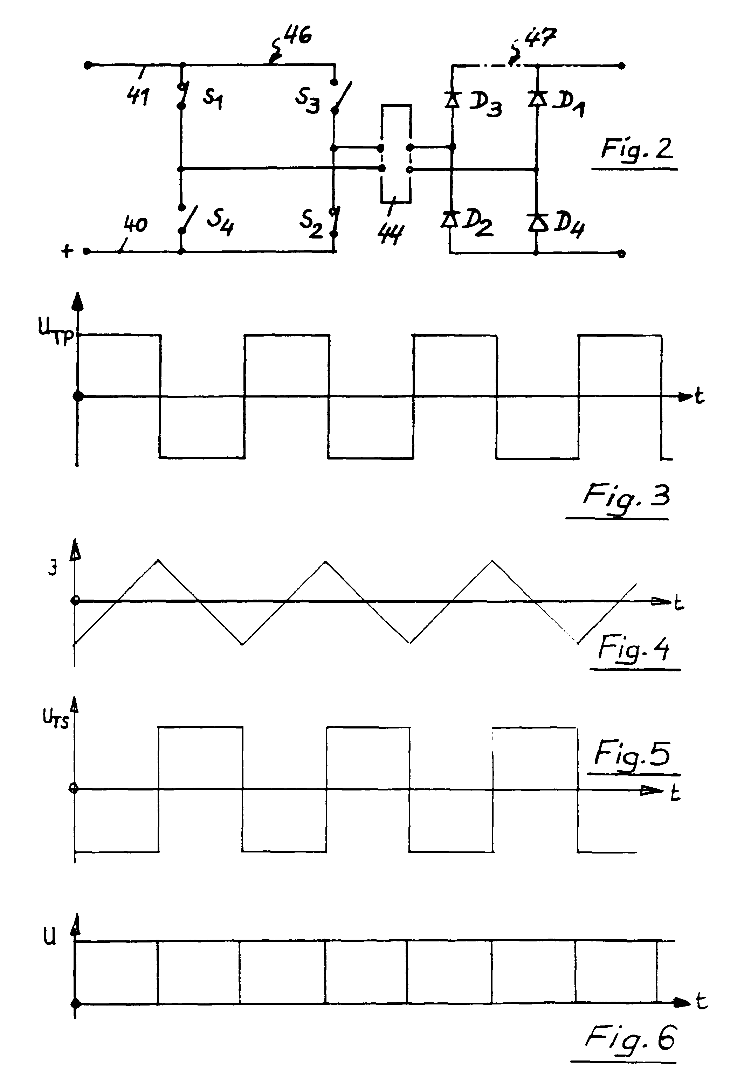

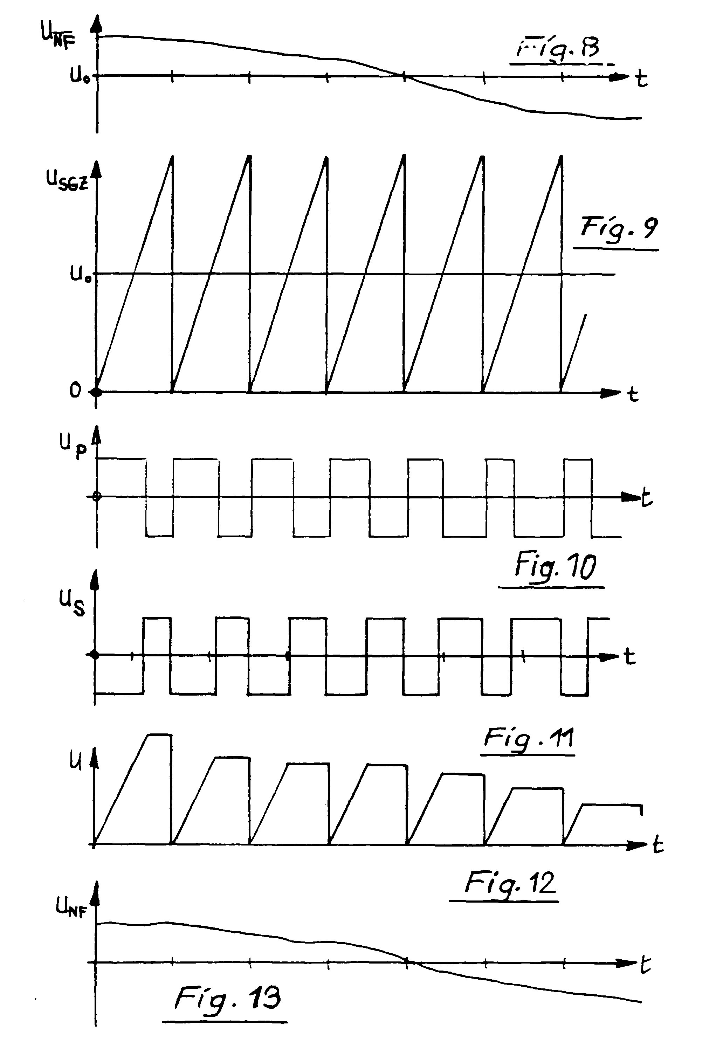

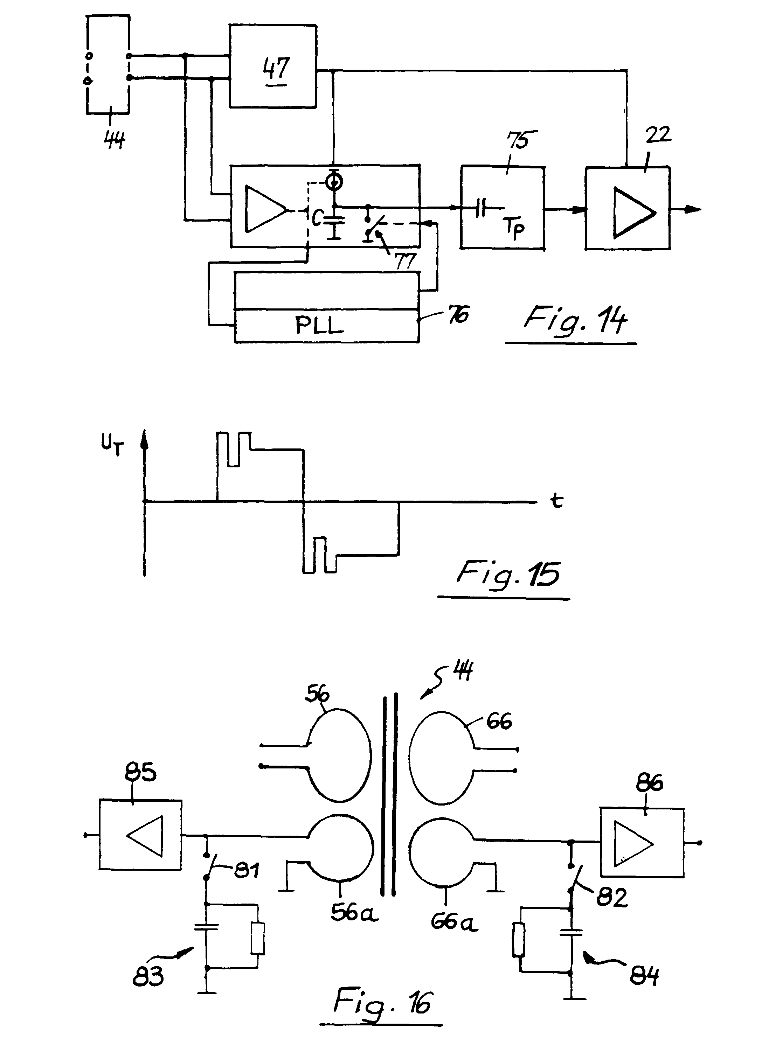

Als Trägersignal wird vorzugsweise ein hochfrequentes, rechteckförmiges Wechselspannungssignal verwendet, wie es in Figur 3 dargestellt ist. Ein solches Trägersignal kann aus der im Fahrzeug vorhandenen Batteriespannung gemäss Figur 2 leicht durch eine Brückenschaltung 46 erzeugt werden: Vier schnelle elektronische Schalter S1, S2, S3 und S4 sind zu einer Brücke 46 zusammengeschaltet, welche über die Leitungen 40 und 41 aus der Fahrzeugbatterie gespeist wird. Entweder sind die Schalter S1 und S2, oder die Schalter S3 und S4 geschlossen, und das im Wechsel, so dass an den Eingangsklemmen des als Transformator ausgebildeten Steckverbinders 44 (oder 45) die in Figur 3 dargestellte Rechteckspannung erscheint. Durch die Rechteckform des Wechselspannungssignals liegt an der Primärwicklung 56 des Transformators eine konstante Spannung an, welche im Idealfall einen linear ansteigenden Strom (Figur 4) und damit eine konstante Flußänderung im Kern 55, 59 erzeugt. Die konstante Flußänderung erzeugt eine konstante Sekundärspannung (Figur 5). Durch das fortwährende Umpolen der Primärspannung $U_{TP}$ (Figur 3) entsteht ein dreieckiger Stromverlauf (Figur 4) und eine sekundäre Rechteck-Wechselspannung $U_{TS}$ (Figur 4), welche im Türmodul 2 (oder 3) durch eine Gleichrichterbrücke 47, bestehend aus den Dioden D1 bis D4 gleichgerichtet wird und die in Figur 6 dargestellte Gleichspannung ergibt, welche im Idealfall lückenfrei ist. Der Glättungsaufwand für diese Gleichspannung beschränkt sich auf die Überbrückung der durch die endliche Schaltflankensteilheit entstehenden nadelförmigen Spannungseinbrüche. Der Stromflußwinkel und damit die Ausnutzung des Transformators ist viel besser als bei einer sinusförmigen Primärspannung. Die Gleichrichterbrücke 47 dient als Stromquelle für die Versorgung der Verbraucher in der Tür.

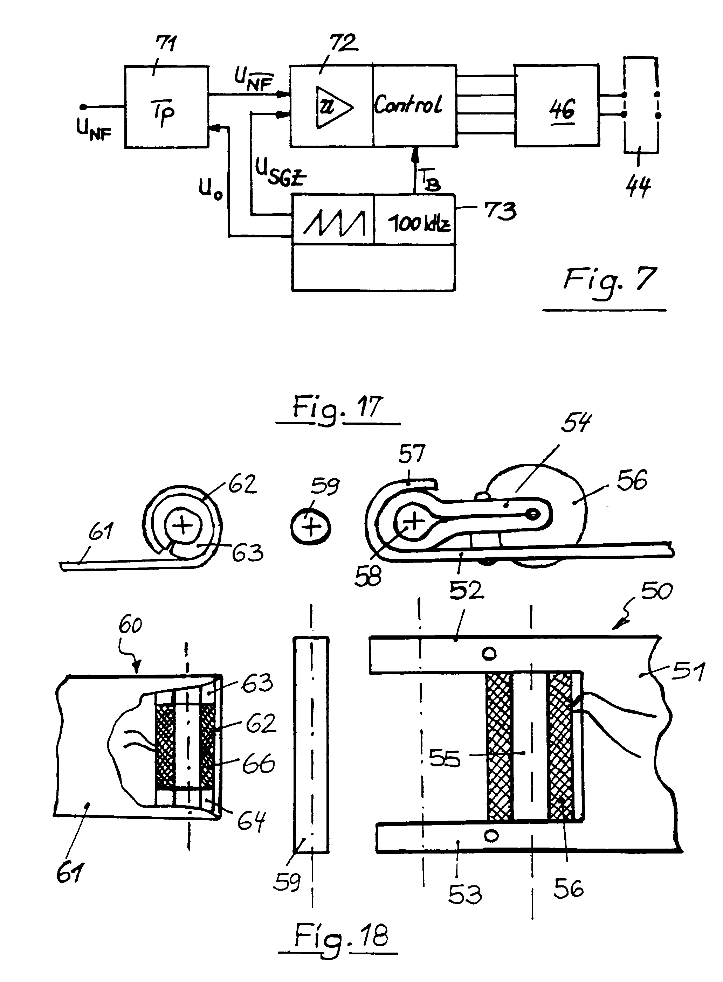

Die Übertragung eines NF-Signals kann durch Modulation des Tastverhältnisses des in Figur 3 dargestellten rechteckförmigen Trägersignals erfolgen, welches zu diesem Zweck vorzugsweise eine Frequenz von größenordnungsmässig 100 kHz hat. Dem dient die in Figur 7 dargestellte Schaltung: Das NF-Signal wird einem Tiefpaßfilter 71 zugeführt, dadurch in seiner Bandbreite und Amplitude begrenzt und zur Einstellung eines passenden Arbeitspunktes zu einer konstanten Gleichspannung $U_O$ addiert. Das auf diese Weise entstehende niederfrequente Gleichspannungssignal $U_{\overline{NF}}$ ist in Figur 8 dargestellt. Zwischen dem Tiefpaßfilter 71 und der Brückenschaltung 46 (siehe Figur 2) befindet sich eine Steuerschaltung 72 für die Brückenschaltung 46, welche bestimmt, wann die Schalter S1 und S2 bzw. S3 und S4 umschalten. Dazu ist weiterhin ein Taktgenerator 73 vorgesehen, welcher ein 100 kHz-Taktsignal an die Steuerschaltung 72 liefert. In diesem 100 kHz-Takt werden beispielsweise die Schalter S1 und S2 geschlossen und gleichzeitig die Schalter S3 und S4 geöffnet. Wann innerhalb der Periode des Taktgenerators 73 die Schalter S1 und S2 geöffnet und stattdessen die Schalter S3 und S4 geschlossen werden, wird durch Abtasten des Signals gemäss Figur 8 durch die in Figur 9 dargestellte Sägezahnspannung $U_{SGZ}$ bestimmt, welche die unipolare Amplitude $2U_O$ sowie eine Frequenz von 100 kHz hat und ebenfalls vom Taktgenerator 73 erzeugt wird. Die Sägezahnspannung $U_{SGZ}$ wird in der Steuerschaltung 72 mit der niederfrequenten Spannung $U_{\overline{NF}}$ verglichen. Der Vergleich wird mit Beginn jeder Periode des Taktgenerators 73 gestartet; sobald die Sägezahnspannung den aktuellen Spannungswert $U_{\overline{NF}}$ erreicht hat, wird die Brückenschaltung 46 umgepolt; mit Beginn der nächsten Periode des Taktgenerators wird die Brücke 46 erneut umgepolt. Damit ist der Amplitudenwert $U_{\overline{NF}}$ in das Tastverhältnis codiert, das auf diese Weise in seiner Pulsbreite modulierte Trägersignal ist in Figur 8 dargestellt.

Das pulsbreitenmodulierte Signal wird über das als Transformator ausgebildete Koppelelement 44 in die Fahrzeugtür übertragen, in welcher der Türmodul 2 die in Figur 14 dargestellte Schaltung enthält: Die Brückenschaltung 47 (siehe Figur 2), eine Schaltung 74 zur Umsetzung des Tastverhältnisses, ein Tiefpaßfilter 75, einen NF-Verstärker 22 und eine phasenstarre Steuerschaltung 76. Der Tastverhältnis-Umsetzer 74 ermittelt das Vorzeichen der ihm zugeführten pulsbreitenmodulierten Rechteckspannung und schaltet bei negativer Spannung eine von der Brückenschaltung 47 gespeiste Stromquelle im Tastverhältnis-Umsetzer 74 auf einen Kondensator C, welcher aufgeladen wird, solange die negative Halbwelle der Rechteckspannung (Figur 11) andauert; bis zu diesem Zeitpunkt steigt die Spannung am Kondensator C linear an (Figur 12) und bleibt dann konstant, bis der Kondensator C mit Beginn einer jeden 100 kHz-Periode durch einen elektronischen Schalter 77 entladen wird. Zu diesem Zweck lockt sich die phasenstarre Steuerschaltung auf die Arbeitsfrequenz von 100 kHz des Systems auf und übermittelt an den Tastverhältnisumsetzer 74 die erforderlichen Steuersignale, durch welche mit Beginn einer jeden 100 kHz-Periode der Kondensator C wieder entladen wird. Der Spannungsverlauf am Kondensator C ist in Figur 12 dargestellt und bildet eine Impulsfolge, deren Amplitude durch das Tastverhältnis der pulsbreitenmodulierten Rechteckspannung in Figur 10 und 11 bestimmt wird. Die Spannung $U_C$ am Kondensator C enthält neben der Niederfrequenz des NF-Signals die Systemfrequenz von 100 kHz und Oberwellen der Systemfrequenz sowie einen Gleichspannungsanteil; sie wird einem AC-gekoppelten Tiefpaßfilter höherer Ordnung 75 zugeführt, welches den NF-Anteil abtrennt und dem NF-Verstärker 22 zuführt, der schließlich den Türlautsprecher 4 speist. Auch der NF-Verstärker 22 wird durch die Brückenschaltung 47 mit Strom versorgt. Das ihm zugeführte NF-Signal ist in Figur 13 dargestellt.

Befehle und Zustandsinformationen werden in Gestalt einer Folge von binär codierten Signalen (Datentelegramm) übertragen. Zu diesem Zweck wird die Periode des Trägersignals $U_T$ (siehe Figur 3) als "Leer-Rahmen" für ein zu übertragendes Bit des seriellen Datentelegramms benutzt. Markiert man diesen "Leer-Rahmen" jeweils nach einer Zustandsänderung, so ist die Codierung von vier Zuständen in jeder Übertragungsperiode möglich - siehe Figur 15:

| | |
|---|---|
| 1. Markierung 1 nicht vorhanden, | Markierung 2 nicht vorhanden |
| 2. Markierung 1 vorhanden, | Markierung 2 nicht vorhanden |
| 3. Markierung 1 nicht vorhanden, | Markierung 2 vorhanden |
| 4. Markierung 1 vorhanden, | Markierung 2 vorhanden |

Zur Erhöhung der Übertragungs-Sicherheit läßt sich der so gegebene Coderaum sinnvoll redundant nutzen:

| | |
|---|---|
| Keine Übertragung: | |
| 1. Markierung 1 nicht vorhanden, | Markierung 2 nicht vorhanden |
| Logische "1": | |
| 2. Markierung 1 vorhanden, | Markierung 2 nicht vorhanden |
| Logische "0": | |
| 3. Markierung 1 nicht vorhanden, | Markierung 2 vorhanden |
| Start-Stop-Bit: | |
| 4. Markierung 1 vorhanden, | Markierung 2 vorhanden |

Solche Markierungen können im Modem 13 (Figur 1) beispielsweise in Form eines HF-Signals mit einer Frequenz von einigen MHz (HF-Burst) auf die Rechteckimpulse aufgesetzt werden und das Modem 21 bzw. 31 im Türmodul 2 bzw. 3 restauriert das auf diese Weise übertragene Datentelegramm. Zur übertragung des Datentelegramms kann die in Figur 16 dargestellte Schaltung dienen. Darin hat der als Steckverbinder dienende Transformator neben einer primären Hauptwicklung 56 und einer sekundären Hauptwicklung 66 zusätzlich eine primäre Hilfswicklung 56a und eine sekundäre Hilfswicklung 66a auf einem gemeinsamen Kern. Die Hilfswicklungen 56a, 66a können über ein Schaltelement 81 bzw. 82 mit einer RC-Kombination 83, 84 zu einem gedampften Schwingkreis geschlossen werden. Ausserdem ist jede Hilfswicklung 56a, 66a mit einem Schwingungsdetektor 85, 86 versehen. Soll eine Schaltflanke in der in Figur 15 dargestellten Weise markiert werden, wird auf der sendenden Seite der Schwingkreis geschlossen und durch die Schaltflanke im Transformator zum gedämpften Schwingen angeregt. Über den Transformator überträgt sich diese Schwingung auf die jeweils andere Seite des Transformators und wird über die offene Wicklung dem Schwingungsdetektor 85 bzw. 86 zugeführt, aus dessen Ausgangssignal das Datentelegramm zurückgewonnen wird.

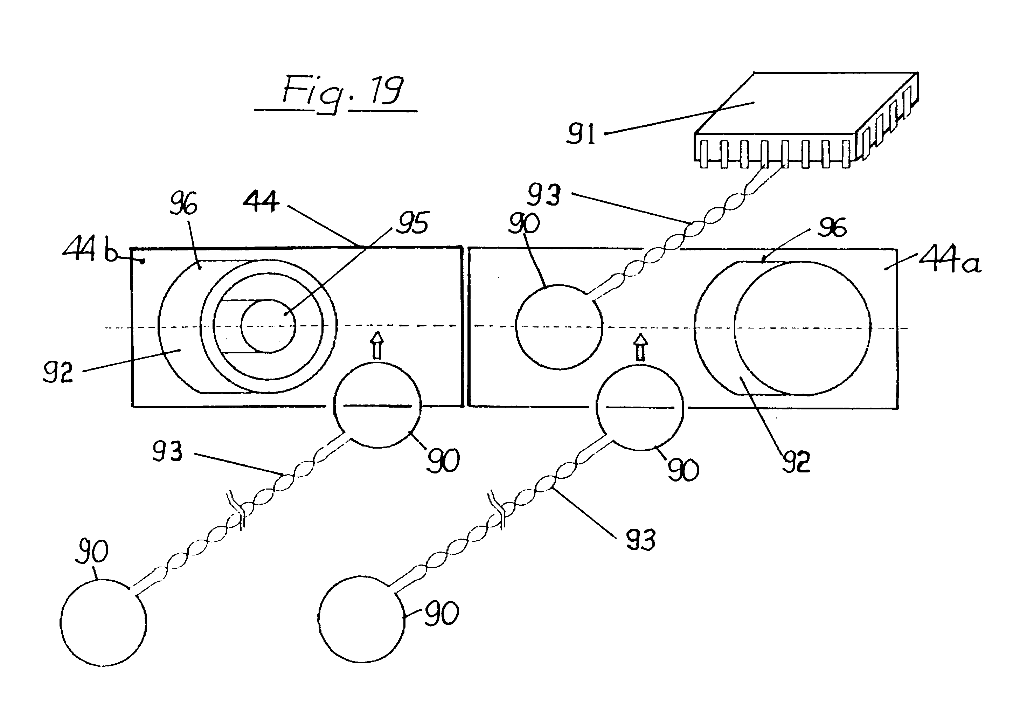

Figur 19 zeigt eine Übertragungseinrichtung mit einem Modem 91, z.B. einem FSK-Modem als Sender. Der Modem 91 übermittelt Signale, auf ein Trägersignal aufmoduliert, an einen nicht dargestellten Empfänger. Die Übertragung der Signale erfolgt über verdrillte Zweidrahtleitungen 93, welche durch eine induktive Steckverbindung 44 miteinander gekoppelt sind. Eine erste Zweidrahtleitung 93 geht vom Modem 91 aus und ist an ihrem vom Modem 91 entfernten Ende durch eine Spule 19 abgeschlossen, welche im Steckverbinder 44 liegt. Vom Steckverbinder 44 gehen zwei weitere verdrillte Zweidrahtleitungen 93 aus, welche an ihren beiden Enden jeweils durch eine Spule 90 abgeschlossen sind. Zwei dieser Spulen sind ebenfalls im Steckverbinder 44 angeordnet. Die beiden übrigen, ausserhalb des Steckverbinders 44 liegenden Spulen 90 können Bestandteil weiterer gleichartiger Steckverbinder sein.

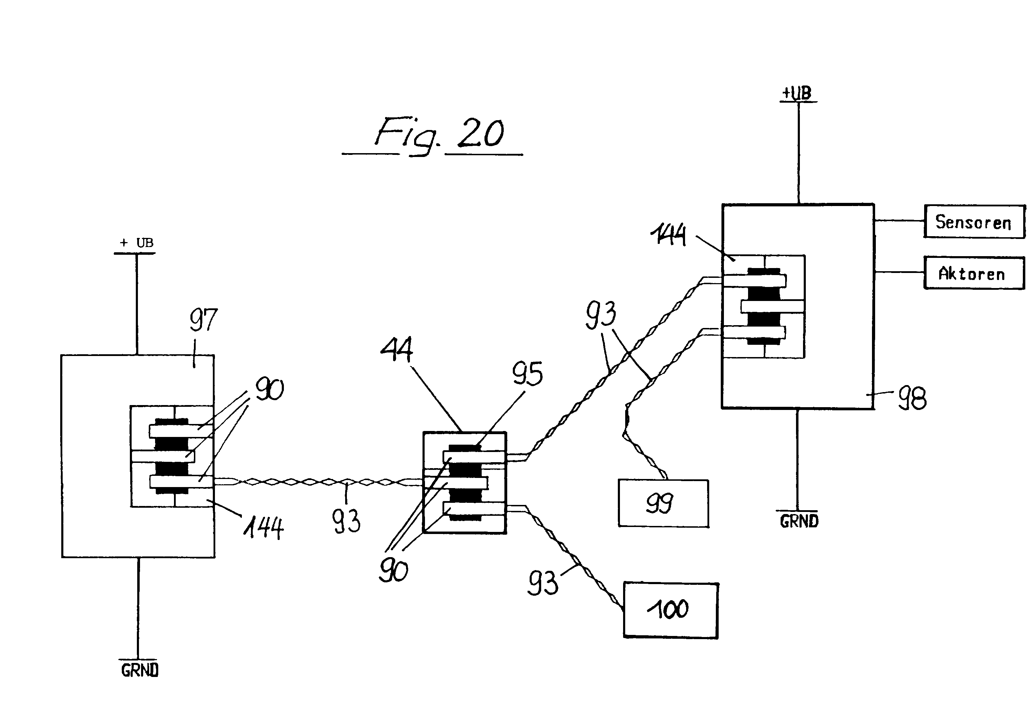

Der nur schematisch dargestellte Steckverbinder hat als wesentliche Elemente ausser den drei Spulen 90 noch zwei Ferritschalen 92 mit zylindrischem Kern 95 und zylindrischem Mantel 96. Zusammengefügt ergänzen sich die beiden Halbschalen 92 zu einem im wesentlichen geschlossenen, hohlzylindrischen Flußleitstück mit Kern 95, wenn die beiden Teile 44a und 44b des Steckverbinders zusammengefügt sind. Dadurch, dass in den Steckverbinder eine Zweidrahtleitung hineinführt und zwei Zweidrahtleitungen herausführen, lassen sich damit verzweigte Leitungsstrukturen aufbauen. Ein Beispiel dafür ist in Figur 20 dargestellt: Figur 20 zeigt einen induktiven Steckverbinder, auf dessen Ferritkern 95 drei Spulen 90 angeordnet sind. Eine erste Zweidrahtleitung führt zu einem ersten Modul 97, wo der Anschluß über einen induktiven Steckverbinder 144 entsprechend dem Steckverbinder 44 erfolgt, wobei ein Teil des Steckverbinders 144 in Analogie zu einer Gerätebuchse Bestandteil des Moduls 97 ist und der zweite Teil des Steckverbinders 144 am Ende der Zweidrahtleitung 93 angebracht ist. In entsprechender Weise führt von dem Steckverbinder 44 eine weitere Zweidrahtleitung 93 zu einem zweiten Modul 98, welcher wiederum Verbindung mit Sensoren und Aktoren haben kann. Im Steckverbinder 144 am zweiten Modul 98 findet eine weitere Verzweigung in eine Zweidrahtleitung 93 statt, welche zu einem weiteren Modul oder Gerät 99 führt. Vom Steckverbinder 44 geht schließlich eine dritte Zweidrahtleitung 93 ab und führt zu einem vierten Modul oder Gerät 100.

Eine Verzweigung wie am Modul 98 kann auch am Modul 97 erfolgen.

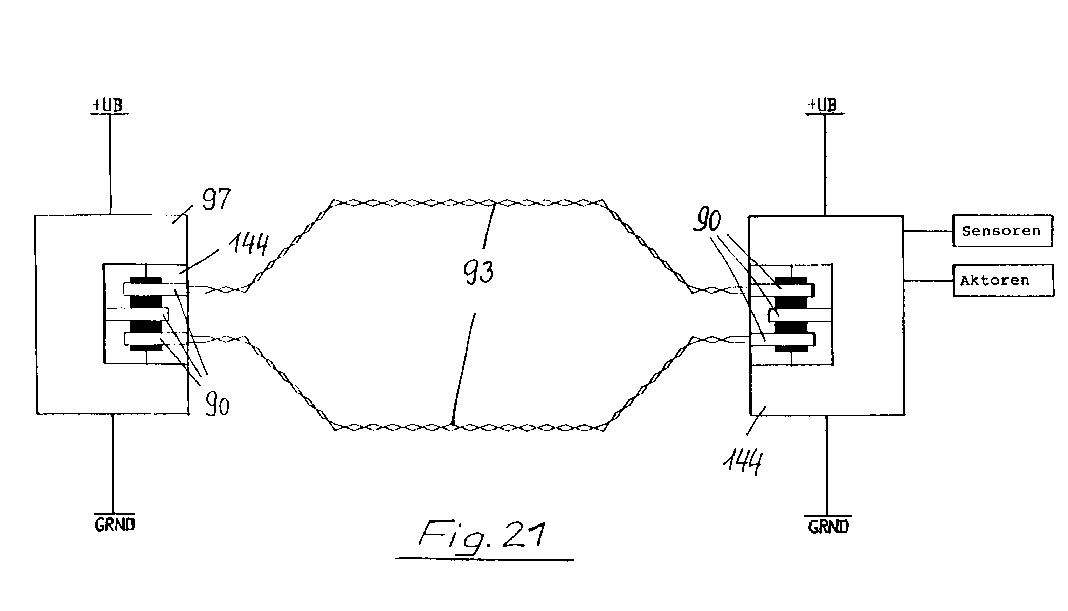

Figur 21 zeigt eine redundante Leitungsverbindung zwischen zwei Modulen 97 und 98, welche jeweils über einen Steckverbinder 144 mit zwei Ausgängen über zwei Zweidrahtleitungen 93 parallel miteinander verbunden sind. Fällt der Signalweg über eine der Zweidrahtleitungen 93 aus, steht immer noch der Signalweg über die andere Zweidrahtleitung 93 zur Verfügung.

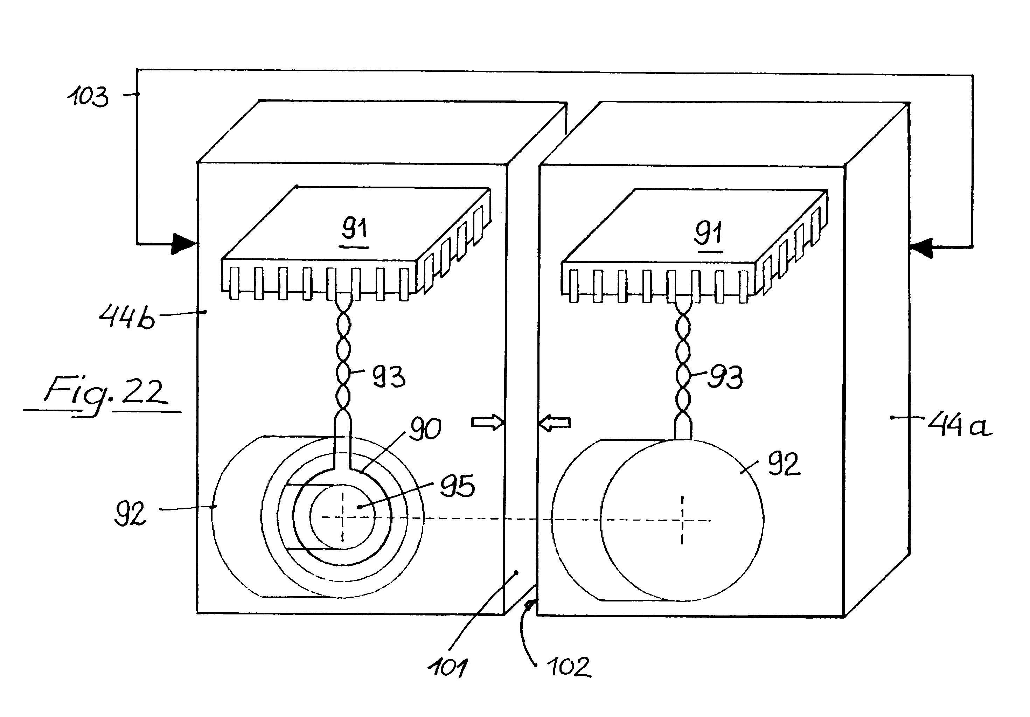

Figur 22 zeigt einen Verbinder aus zwei untereinander gleichen Teilen, die jeweils ein Modem 91 enthalten, von welchem eine verdrillte Zweidrahtleitung 93 in eine Spule 90 mündet, welche in einem am einen Ende offenen zylindrischen Flußleitstück 92 mit Kern 95 liegt. Die beiden Flußleitstücke 92 sind mit ihren offenen Enden einander zugewandt angeordnet, und zwar so, dass sie dicht hinter den einander zugewandten Gehäuseoberflächen 101 und 102 liegen. Sind die beiden Gehäuseoberflächen 101 und 102 aneinander gelegt, dann befindet sich zwischen den beiden Flußleitstücken 92 eine Schicht aus dem Kunststoffmaterial des Gehäuses, durch welches der magnetische Fluß hindurchgreifen kann. Die beiden Teile 44a und 44b des Verbinders werden durch äussere Einwirkung, z.B. durch eine Klammer oder durch eine Schrumpfhülle, schematisch dargestellt durch den Doppelpfeil 103, zusammengehalten.

**Patentansprüche**

1. Einrichtung zum leitungsgebundenen Übertragen elektrischer Signale, insbesondere Schwachstromsignalen, von einem Sender zu einem Empfänger über Zweidrahtleitungen (93), in welchen - um Sender und Empfänger voneinander trennen zu können - wenigstens ein Steckverbinder (44) vorgesehen ist,
   wobei die Zweidrahtleitungen (93) durch Spulen (90) abgeschlossen sind, welche im Steckverbinder (44) transformatorisch miteinander gekoppelt sind,
   **dadurch gekennzeichnet**, daß die Empfänger (4 bis 7) in einer Fahrzeugtür angeordnet sind, der Sender außerhalb dieser an anderer Stelle im Fahrzeug angeordnet ist und in dem Bereich, wo die Tür schwenkbar mit Schamieren an der Fahrzeugkarosserie angebracht ist, ein Teil (60) des Steckverbinders (44, 45) an der Tür und ein anderes Teil (50) des Steckverbinders an der Karosserie angebracht ist.

2. Einrichtung nach Anspruch 1, **dadurch gekennzeichnet**, daß die zwei Drähte der Zweidrahtleitungen (93) miteinander verdrillt sind.

3. Einrichtung nach Anspruch 1 oder 2, in welcher auf der Senderseite ein Frequenzgenerator (12) zur Erzeugung eines Trägersignals, ein Modulator (13, 91), welcher die für den Empfänger (4 -7) bestimmten Signale dem Trägersignal aufmoduliert, und auf der Empfängerseite ein Demodulator (21, 31) vorgesehen sind, in welchem die Signale durch Demodulation zurückgewonnen werden.

4. Einrichtung nach Anspruch 3, **gekennzeichnet durch** einen Modulator (13, 91), in welchem für mehrere Empfänger (4-7) bestimmte elektrische Signale auf dasselbe Trägersignal aufmoduliert werden.

5. Einrichtung nach Anspruch 4, **dadurch gekennzeichnet**, daß zum Versorgen der Empfänger (4 bis 7) mit den Signalen auf der Senderseite ein BUS-Steuergerät (1) und ein Mikroprozessor (14) zur Steuerung der Abläufe im BUS-Steuergerät (1) vorgesehen sind, so daß der Modulator (13, 91) die Signale als seriellen Daten-Bus auf das Trägersignal aufmoduliert und über eine Zweidrahtleitung (93) und über den Steckverbinder (44) überträgt.

6. Einrichtung nach Anspruch 3, 4 oder 5, **dadurch gekennzeichnet**, daß ein rechteckförmiges Trägersignal verwendet wird.

7. Einrichtung nach einem der Ansprüche 3 bis 6, **dadurch gekennzeichnet**, daß der Modulator (13, 91) ein Frequenzmodulator ist.

8. Einrichtung nach einem der Ansprüche 3 bis 6, **dadurch gekennzeichnet**, daß der Modulator (13, 91) ein Pulsbreitenmodulator ist, um NF-Audiosignale zu übertragen.

9. Einrichtung nach einem der Ansprüche 3 bis 8, **dadurch gekennzeichnet**, daß auf der Empfängerseite als Stromquelle für die Versorgung der Empfänger (4 bis 7) ein Gleichrichter (47) vorgesehen ist, der als Trägersignal gleich richtet.

10. Einrichtung nach einem der Ansprüche 3 bis 9, in welcher die Signale binär codiert und als serieller Daten-Bus auf dem Trägersignal übertragen werden.

11. Einrichtung nach Anspruch 10, **dadurch gekennzeichnet**, daß ein Amplitudenmodulator (13, 91) vorgesehen ist, welcher die binären Signale dem Trägersignal durch Amplitudenmodulation aufprägt.

12. Einrichtung nach einem der Ansprüche 3 bis 11, in welcher als Modulator (13, 91) sowie als Demodulator (21, 31) Modems vorgesehen sind, die eine Signalübertragung in beiden Richtungen ermöglichen.

13. Einrichtung nach einem der Ansprüche 3 bis 12, in welcher NF-Signale, insbesondere für eine Lautsprecher (4, 5) bestimmte Audiosignale, ebenfalls dem Trägersignal aufmoduliert, auf der Empfängerseite frequenzmässig von den übrigen Signalen getrennt und ggfs. nach Verstärkung ihrem bestimmungsgemäßen Empfänger (4 bis 7), insbesondere einem Lautsprecher, zugeführt werden.

14. Einrichtung nach einem der Ansprüche 3 bis 13, in welcher für das Trägersignal eine Frequenz zwischen 80 kHz und 120 kHz gewählt ist.

15. Einrichtung nach einem der vorstehenden Ansprüche, **dadurch gekennzeichnet,** daß die beiden Teile (50, 60) des Steckverbinders (44, 45) scharnierartig ineinandergreifen.

16. Einrichtung nach Anspruch 15, **dadurch gekennzeichnet**, daß der Steckverbinder (44, 45) ein Scharnier ist.

17. Einrichtung nach Anspruch 15 oder 16, **dadurch gekennzeichnet**, daß der Steckverbinder (44, 45) ein Transformator ist, dessen Primärwicklunng (56) an der Karosserie außerhalb der Tür und dessen Sekundärwicklung (66) an der Tür angeordnet ist und einen ferromagnetischen Scharnierbolzen (59) umschließt, der in ein an der Karosserie angebrachtes ferromagnetisches Joch (52, 53) eingreift.

18. Einrichtung nach Anspruch 17, **dadurch gekennzeichnet**, daß der Scharnierbolzen (59) aus einem längs geschlitzten Rohr aus nichtmagnetischem Stahl mit einem weichmagnetischen Kern besteht.

19. Einrichtung nach einem der Ansprüche 5 und 15 bis 18, **dadurch gekennzeichnet**, daß zum Versorgen von mehreren elektrischen Verbrauchern in der Tür mit elektrischen Steuersignalen und eines anderen Verbrauchers in der Tür, insbesondere eines Lautsprechers, mit NF-Signalen, insbesondere Audiosignalen, ein Bus-Steuergerät (1) mit einer Abfrageeinheit (10) zum Abfragen der Stellung von Schaltern und/oder anderen außerhalb der Tür angeordneten Betätigungselementen (16) und mit einem Mikro-Prozessor (14) zur Steuerung der Abläufe im Bus-Steuergerät (1) vorgesehen ist, wobei der Modulator (13) die NF-Signale empfängt und auf das Trägersignal aufmoduliert und die von der Abfrageeinheit (10) gelieferten Steuersignale empfängt und als seriellen Daten-Bus auf das Trägersignal aufmoduliert, und
daß der in der Tür vorgesehene Demodulator (21, 31) die vom Bus-Steuergerät (1) übermittelten Signale empfängt, demoduliert und in die Steuersignale und die NF-Signale trennt.

20. Einrichtung nach Anspruch 19, **dadurch gekennzeichnet**, daß der Demodulator (21, 31) in der Tür Bestandteil einer Schaltungsanordnung (2, 3) - nachfolgend als Türmodul bezeichnet - ist, welche einen NF-Verstärker (22, 32) für die NF-Signale und Schaltstufen (23, 33) zum Umsetzen der Steuersignale in Stellsignale für in der Tür vorgesehene Stellelemente (6, 7) enthält.

21. Einrichtung nach Anspruch 20, **dadurch gekennzeichnet**, daß im Türmodul (2, 3) ein Mikro-Controller (24, 34) zum Auswerten der demodulierten Steuersignale und zum Steuem der Schaltstufen (23, 33) vorgesehen ist.

22. Einrichtung nach einem der Ansprüche 19 bis 21, **dadurch gekennzeichnet**, daß das Bus-Steuergerät (1) mit mehreren Türmodulen (2, 3) verbunden ist.

23. Einrichtung nach einem der Ansprüche 19 bis 22, **dadurch gekennzeichnet,** daß im Türmodul (2, 3) ebenfalls eine Abfrageeinheit (20, 30), welche die Stellung von in der Tür angeordneten Schaltern und anderen Betätigungselementen (8, 9) abfragt, und ein Modulator (21, 31) zum Aufmodulieren der von der Abfrageeinheit (20, 30) gelieferten Steuersignale auf das Trägersignal vorgesehen sind, und daß im Bus-Steuergerät (1) eine Demodulatorstufe (13) vorgesehen ist, in welcher das über den Steckverbinder (44, 445) vom Türmodul (2, 3) übermittelte modulierte Signal zur Rückgewinnung der darin enthaltenen Steuersignale demoduliert und durch den Mikroprozessor (14) gesteuert an Schaltstufen zum Umsetzen der Steuersignale für außerhalb der Türen vorgesehene Stellelemente oder an den Modulator (13) zur Übertragung an einen anderen Türmodul (3, 2) übergeben wird.

24. Einrichtung nach Anspruch 11, **dadurch gekennzeichnet**, daß der Amplitudenmodulator ein Impulsgenerator oder Frequenzgenerator ist, dessen Ausgangssignal zum Trägersignal addiert wird.

25. Einrichtung nach einem der Ansprüche 1 bis 14, **dadurch gekennzeichnet**, daß der Steckverbinder (44) einen geteilten Flußleitkörper (92) aus ferromagnetischem Material enthält, von welchem ein erster Teil im einem Teil (44a) des Steckverbinders liegt und wenigstens eine Spule (90) aufnimmt und ein zweiter Teil des Flußleitkörpers (92) im anderen Teil (44b) des Steckverbinders liegt und wenigstens eine weitere Spule (90) aufnimmt, wobei die beiden Teile des Flußleitkörpers (92) sich zu einem die Spulen (90) durchsetzenden Kern (95), vorzugsweise mit magnetischem Rückschlußteil (96) auf der Spulenaußenseite, ergänzen.

26. Einrichtung nach Anspruch 25, **dadurch gekennzeichnet**, daß der Flußleitkörper (92) eine i.w. abgeschlossene Schale ist.

27. Einrichtung nach einem der Ansprüche 1 bis 14 und 25 bis 27, **dadurch gekennzeichnet**, daß der eine Teil (44b) des Steckverbinders genau eine Spule (90) und der andere Teil (44a) des Steckverbinders mehr als eine Spule (90) enthält.

28. Einrichtung nach einem der Ansprüche 1 bis 14 und 25 bis 27, **dadurch gekennzeichnet**, daß zwei Zweidrahtleitungen (93) von einem Steckverbinder (144) ausgehen und in einem anderen Steckverbinder (144) enden (Fig. 21).

29. Einrichtung nach einem der Ansprüche 1 bis 14 und 25 bis 28, **dadurch gekennzeichnet**, daß zwischen den beiden Teilen des Flußleitkörpers (92) eine Schicht aus nichtmagnetischem, elektrisch nicht leitendem Material liegt (Fig. 22).

30. Einrichtung nach einem der Ansprüche 1 bis 14 und 25 bis 29, **dadurch gekennzeichnet**, daß die beiden Teile (44a, 44b) des Steckverbinders gleich ausgebildet sind.

31. Scharnier für Fahrzeugtüren, **dadurch gekennzeichnet**, daß es zur drahtlosen Übertragung von elektrischen Signalen und/oder Strömen als Transformator ausgebildet ist, dessen Primärwicklung (56) Bestandteil der einen Gelenkhälfte (50) und dessen Sekundärwicklung (66) Bestandteil der anderen Gelenkhälfte (60) ist.

32. Verwendung eines Steckverbinders (44), welcher elektrische Signale, insbesondere Schwachstromsignale, von einem Sender zu einem Empfänger über Zweidrahtleitungen (93) überträgt, welche durch Spulen (90) abgeschlossen sind, welche im Steckverbinder (44) transformatorisch miteinander gekoppelt sind,
zum Verkabeln von Fahrzeugen an Stellen, an welchen alternativ die Verwendung eines Steckverbinders möglich ist, welcher direkten elektrischen Kontakt gibt.

33. Verwendung eines Steckverbinders nach Anspruch 32 zum Verkabeln von Fahrzeugtüren.

34. Verwendung eines Steckverbinders nach Anspruch 32 oder 33 in einer Einrichtung mit den Merkmalen nach einem der Ansprüche 1 bis 30,

**Claims**

1. Apparatus for the transmission of electric signals, in particular low current signals, through two-wire lines (93) from a transmitter to a receiver in which lines - in order to be able to separate the transmitter from the receiver - there is provided at least one connector (44),
the two-wire lines (93) being terminated by coils (90) which are transformer-like mutually coupled in the connector, characterized in that the receivers (4 to 7) are located in an automobile door, that the transmitter is located outside of the door elsewhere in the automobile and that, in the area where the door is rotatably affixed to the automobile body with hinges, one part (60) of the connector (44, 45) is mounted at the door and another part (50) of the connector is mounted at the automobile body.

2. Apparatus as set forth in claim 1, characterized in that the two wires of the two-wire lines (93) are twisted into each other.

3. Apparatus as set forth in claim 1 or 2 providing, on the transmitter end, a frequency generator (12) generating a carrier signal, a modulator (13, 91) modulating onto the carrier signal the signals to be transmitted to the receiver (4-7), and, on the receiver end, a demodulator (21, 31) restoring the signals by demodulation.

4. Apparatus as set forth in claim 3, characterized by a modulator (13, 91) in which electric signals for several receivers are modulated onto the same carrier signal.

5. Apparatus as set forth in claim 4, characterized in that, at the transmitter end a bus control equipment (1) supplying the receiver (4 to 7) with the signals and a micro processor (14) are provided for the control of the sequence of operations in the bus control equipment (1) so that the modulator (13, 91) modulates the signals as a serial data bus onto the carrier signal for transmission by means of a two-wire line (93) through the connector (44).

6. Apparatus as set forth in claim 3, 4 or 5, characterized in that a rectangular carrier signal is used.

7. Apparatus as set forth in any of the claims 3 to 6, characterized in that the modulator (13, 91) is a frequency modulator.

8. Apparatus as set forth in any of the claims 3 to 6, characterized in that the modulator (13, 91) is a pulse-width modulator in order to transmit low frequency audio signals.

9. Apparatus as set forth in any of the claims 3 to 8, characterized in that at the receiver end a rectifier (47) is provided which rectifies the carrier signal and serves as a power source for the supply of the receivers (4 to 7).

10. Apparatus as set forth in any of the claims 3 to 9 in which the signals are binary coded and transmitted on the carrier signal as a serial data-bus.

11. Apparatus as set forth in claim 10, characterized in that an amplitude modulator (13, 91) is provided which modulates the binary signals onto the carrier signal through amplitude modulation.

12. Apparatus as set forth in any of the claims 3 to 11 in which modems are provided serving as modulator (13, 91) as well as demodulator (12, 31) enabling signal transmission in both directions.

13. Apparatus as set forth in any of the claims 3 to 12, in which low frequency signals, in particular audio signals for a loud speaker (4, 5), are also modulated onto the carrier signal, at the receiver end separated from the other signals according to frequency, if necessary amplified, and sent to the targeted receiver (4 to 7), especially to a loud speaker.

14. Apparatus as set forth in any of the claims 3 to 13, in which a frequency between 80 kHz and 120 kHz is chosen as carrier frequency.

15. Apparatus as set forth in any of the preceding claims, characterized in that the two parts (50, 60) of the connector (44, 45) are mutually engaging the way the two parts of a hinge engage mutually.

16. Apparatus as set forth in claim 15, characterized in that the connector (44, 45) is a hinge.

17. Apparatus as set forth in claim 15 or 16, characterized in that the connector (44, 45) is a transformer whose primary winding (56) is located at the automobile body exterior to the door and whose secondary winding (66) is located at the door and encloses a ferromagnetic hinge pin (59) which projects into a ferromagnetic yoke (52, 53) which, in turn, is affixed to the automobile body.

18. Apparatus as set forth in claim 17, characterized in that the hinge pin (59) consists of a longitudinally slotted tube made from non-magnetic steel with a soft magnetic core.

**19.** Apparatus as set forth in any of the claims 5 and 15 to 18, characterized in that a bus control equipment (1) is provided for the supply of several electric power consuming devices in the door with electric control signals and for the supply of another power consuming device in the door, especially a loud speaker, with low frequency signals, especially audio signals, and that the bus control equipment (1) contains an inquiry unit (10) for interrogating the position of switches and/or other operating elements (16) located exterior to the door and contains a micro processor (14) for controlling the sequence of operations in the bus control equipment (1), whereby the modulator (13) receives the low frequency signals and modulates them onto the carrier signal and receives control signals from the inquiry unit (10) and modulates them onto the carrier signal as serial data bus, and that the demodulator (21, 31) located in the door receives the signals transmitted from the bus control equipment (1), demodulates them and separates them into the control signals and the low frequency signals.

**20.** Apparatus as set forth in claim 19, characterized in that the demodulator (21, 31) in the door is a part of a circuit arrangement (2, 3) - hereafter named door module - which contains a low frequency amplifier (22, 32) for the low frequency signals and switching units (23, 33) for converting control signals into actuating signals for actuating elements (6, 7) provided in the door.

**21.** Apparatus as set forth in claim 20, characterized in that in the door module (2, 3) a micro controller (24, 34) is provided for evaluating the demodulated control signals and for controlling the switching units (23, 33).

**22.** Apparatus as set forth in any of the claims 19 to 21, characterized in that the bus control equipment (1) is connected to several door modules (2, 3).

**23.** Apparatus as set forth in any of the claims 19 to 22, characterized in that in door module (2, 3), too, an inquiry unit (20, 30) is provided which interrogates the position of switches and other operating elements (8, 9) located in the door, and also a modulator (21, 31) is proved for modulating, the control signals, received from the inquiry unit (20, 30), onto the carrier signal, and that in the bus control equipment (1) a demodulator unit (13) is provided in which the modulated signal transmitted from the door module (2, 3) via the connector (44, 45) is demodulated in order to restore the control signals contained in it and, controlled by the micro processor (14), transmitted to switching units for converting the control signals to control actuating elements exterior to the doors, or transmitted to the modulator (13) for transmission to another door module (3, 2).

**24.** Apparatus as set forth in claim 11, characterized in that the amplitude modulator is a pulse generator or a frequency generator whose output signal is added to the carrier signal.

**25.** Apparatus as set forth in any of the claims 1 to 14, characterized in that the connector (44) contains a two-part magnetic flux conductor (92) made from ferromagnetic material, a first part of which is located in the one part (44a) of the connector and is assembled with at least one winding (90) and a second part of the flux conductor (92) is located in the other part (44b) of the connector and is assembled with at least one further winding (90), whereby the two parts of the flux conductor (92) combine into a core (95) projecting trough the windings (90), preferably with magnetic closure (96) on the outside of the windings.

**26.** Apparatus as set forth in claim 25, characterized in that the magnetic flux conductor (92) is a substantially closed shell.

**27.** Apparatus as set forth in any of the claims 1 to 14 and 25 to 26, characterized in that the one part (44b) of the connector contains exactly one winding (90) and the other part (44a) of the connector contains more than one winding (90).

**28.** Apparatus as set forth in any of the claims 1 to 14 and 25 to 27, characterized in that two two-wire lines (93) exit from one connector (144) and terminate in another connector (144) (Fig. 21).

**29.** Apparatus as set forth in any of the claims 1 to 14 and 25 to 28, characterized in that between the two parts (44a, 44b) of the magnetic flux conductor (92) there is a layer of non-magnetic, electrically non conductive material (Fig. 22).

**30.** Apparatus as set forth in any of the claims 1 to 14 and 25 to 29, characterized in that the two parts (44a, 44b) of the connector are configured equally.

31. Swivel joint for automobile doors, characterized in that it is configured for the wireless transmission of electric signals and/or currents as a transformer, whose primary winding (56) is part of one half of the hinge (50) and whose secondary winding (66) is part of the other half of the hinge.

32. The use of a connector (44) which transmits electric signals, in particular low current signals, from a transmitter to a receiver via two-wire lines (93) which are terminated by coils (90) which are transformer-like mutually coupled in the connector (44)

    for wiring automobiles at locations where alternatively would be possible the use of a connector making direct electric contact.

33. The use of a connector as set forth in claim 32 for wiring automobile doors.

34. The use of a connector as set forth in claim 32 or 33 in an apparatus having the features set forth in any of the claims 1 to 30.


**Revendications**

1. Mécanisme pour la transmission guidée de signaux électriques, en particulier de signaux de courant de faible intensité, d'un émetteur à un récepteur via des terminaisons à deux fils (93) dans lequel - pour pouvoir séparer l'un de l'autre le récepteur et l'émetteur - on prévoit au moins un connecteur multibroches (44),

   dans lequel les terminaisons à deux fils (93) portent des bobines (90) à leurs extrémités qui sont couplées l'une à l'autre dans le connecteur multibroches (44) à l'aide d'un transformateur,

   caractérisé en ce que les récepteurs (4 à 7) sont disposés dans la portière d'un véhicule automobile, l'émetteur est disposé à l'écart de cette dernière à un autre endroit dans le véhicule automobile et dans la zone dans laquelle la portière est appliquée sur la carrosserie du véhicule automobile en pivotement via des charnières, une partie (60) du connecteur multibroches (44, 45) étant appliquée sur la portière et une autre partie (50) du connecteur multibroches étant appliquée sur la carrosserie.

2. Mécanisme selon la revendication 1, caractérisé en ce que les deux fils des terminaisons à deux fils (93) sont torsadés l'un à l'autre.

3. Mécanisme selon la revendication 1 ou 2, dans lequel, côté émetteur, on prévoit un générateur de fréquence (12) pour la génération d'un signal porteur, un modulateur (13, 91) qui module sur le signal porteur les signaux déterminés pour les récepteurs (4-7) et, côté récepteur, on prévoit un démodulateur (21, 31) dans lequel les signaux sont récupérés par démodulation.

4. Mécanisme selon la revendication 3, caractérisé par un modulateur (13, 91) dans lequel des signaux électriques déterminés pour plusieurs récepteurs (4-7) sont modulés sur le même signal porteur.

5. Mécanisme selon la revendication 4, caractérisé en ce qu'on prévoit, pour l'alimentation des récepteurs (4 à 7) avec les signaux, côté récepteur, un appareil de commande (1) à système binaire de raccordement (BUS) et un microprocesseur (14) pour la commande des sorties dans l'appareil de commande (1) à système binaire de raccordement (BUS), si bien que le modulateur (13, 91) module les signaux sous forme d'un bus de données sérielles sur le signal porteur et les transmet via une terminaison à deux fils (93) et via le connecteur multibroches (44).

6. Mécanisme selon la revendication 3, 4 ou 5, caractérisé en ce qu'on utilise un signal porteur de forme rectangulaire.

7. Mécanisme selon l'une quelconque des revendications 3 à 6, caractérisé en ce que le modulateur (13, 91) est un modulateur de fréquence.

8. Mécanisme selon l'une quelconque des revendications 3 à 6, caractérisé en ce que le modulateur (13, 91) est un modulateur de largeur d'impulsion pour transmettre des signaux audio basse fréquence.

9. Mécanisme selon l'une quelconque des revendications 3 à 8, caractérisé en ce qu'on prévoit, côté récepteur, à titre de source de courant pour l'alimentation des récepteurs (4 à 7), un redresseur (47) qui fait office de démodulateur sous la forme d'un signal porteur.

10. Mécanisme selon l'une quelconque des revendications 3 à 9, dans lequel les signaux sont codés en binaire et sont transmis au signal porteur sous forme d'un bus de données sérielles.

11. Mécanisme selon la revendication 10, caractérisé en ce qu'on prévoit un modulateur d'amplitude (13, 91) qui imprime les signaux binaires sur le signal porteur par modulation de l'amplitude.

12. Mécanisme selon l'une quelconque des revendications 3 à 11, dans lequel on prévoit, à titre de modulateur (13, 91) et à titre de démodulateur (21, 31), des modulateurs-démodulateurs qui permettent de transmettre des signaux dans les deux directions.

13. Mécanisme selon l'une quelconque des revendications 3 à 12, dans lequel on module également, sur le signal porteur, des signaux basse fréquence, en particulier des signaux audio déterminés pour un haut-parleur (4, 5), on les sépare des autres signaux en fonction de la fréquence côté récepteur et on les achemine le cas échéant après amplification à leurs récepteurs (4 à 7) auxquels ils sont destinés, en particulier à un haut-parleur.

14. Mécanisme selon l'une quelconque des revendications 3 à 13, dans lequel on sélectionne, pour le signal porteur, une fréquence entre 80 kHz et 120 kHz.

15. Mécanisme selon l'une quelconque des revendications précédentes, caractérisé en ce que les deux parties (50, 60) du connecteur à broches (40, 45) s'interpénètrent à la manière d'une charnière.

16. Mécanisme selon la revendication 15, caractérisé en ce que le connecteur multibroches (44, 45) est une charnière.

17. Mécanisme selon la revendication 15 ou 16, caractérisé en ce que le connecteur multibroches (44, 45) est un transformateur dont l'enroulement primaire (56) est disposé contre la carrosserie à l'écart de la portière et dont l'enroulement secondaire (66) est disposé contre la portière et renferme un boulon de charnière ferromagnétique (59) qui vient s'insérer dans une culasse ferromagnétique (52, 53) appliquée sur la carrosserie.

18. Mécanisme selon la revendication 17, caractérisé en ce que le boulon de charnière (59) est constitué d'un tube à fente longitudinale en acier amagnétique comprenant un noyau magnétique doux.

19. Mécanisme selon l'une quelconque des revendications 5 et 15 à 18, caractérisé en ce qu'on prévoit, pour l'alimentation de plusieurs consommateurs électriques dans la portière avec des signaux de commande électriques, et d'un autre consommateur dans la portière, en particulier d'un haut-parleur avec des signaux basse fréquence, en particulier des signaux audio, un appareil de commande (1) à système binaire de raccordement comprenant une unité d'interrogation (10) pour connaître la position des commutateurs et/ou d'autres éléments d'actionnement (16) disposés à l'écart de la portière, ainsi qu'un microprocesseur (14) pour la commande des sorties dans l'appareil de commande (1) à système binaire de raccordement, dans lequel le modulateur (13) reçoit les signaux basse fréquence et les modules sur le signal porteur et reçoit les signaux de commande fournis par l'unité d'interrogation (10) et les modules sur le signal porteur sous la forme d'un bus de données sérielles, et en ce que le démodulateur prévu dans la portière reçoit les signaux transmis par l'unité de commande (1) à système binaire de raccordement, les démodule et les sépare en signaux de commande et en signaux basse fréquence.

20. Mécanisme selon la revendication 19, caractérisé en ce que le démodulateur (21, 31) dans la portière est un élément d'un agencement de circuits (2, 3) - désigné ci-après par l'expression "module de portière" - qui contient un amplificateur basse fréquence (22, 32) pour les signaux basse fréquence et des étages de commutation (23, 33) pour transformer les signaux de commande en signaux de réglage pour des éléments de réglage (6, 7) prévus dans la portière.

21. Mécanisme selon la revendication 20, caractérisé en ce qu'on prévoit, dans le module de portière (2, 3), un micro-ordinateur (24, 34) pour évaluer les signaux de commande démodulés et pour commander les étages de commutation (23, 33).

22. Mécanisme selon l'une quelconque des revendications 19 à 21, caractérisé en ce que l'appareil de commande (1) à système binaire de raccordement est relié à plusieurs modules de portières (2, 3).

23. Mécanisme selon l'une quelconque des revendications 19 à 22, caractérisé en ce qu'on prévoit, dans le module de portière (2, 3), également une unité d'interrogation (20, 30) pour connaître la position de commutateurs disposés dans la portière et d'autres éléments d'actionnement (8, 9), ainsi qu'un modulateur (21, 31) pour la modulation sur le signal porteur des signaux de commande fournis par l'unité d'interrogation (20, 30) et en ce qu'on prévoit, dans l'appareil de commande (1) à système binaire de raccordement, un étage de démodulation (13) dans lequel le signal modulé est transmis depuis le module de portière (2, 3) via le connecteur multibroches (44, 445) à des fins de récupération des signaux de commande qui y sont contenus et est commandé par le microprocesseur (14) sur des étages de commutation pour transformer les signaux de commande pour des éléments de réglage prévus à l'écart des portières ou bien est transféré au modulateur (13) à des fins de transmission à un autre module de portière (3, 2).

24. Mécanisme selon la revendication 11, caractérisé en ce que le modulateur d'amplitude est un générateur d'impulsions ou un générateur de fréquences dont le signal de sortie est ajouté au signal porteur.

25. Mécanisme selon l'une quelconque des revendications 1 à 14, caractérisé en ce que le connecteur multibroches (44) contient un conducteur du flux (92) en deux parties réalisé en une matière ferromagnétique dont une première partie est disposée dans une partie (44a) du connecteur à broches et renferme au moins une bobine (90), une deuxième partie du conducteur du flux (92) étant disposée dans l'autre partie (44b) du connecteur à broches et renferme au moins une bobine supplémentaire (90), dans lequel les deux parties du conducteur du flux (92) se complètent pour former un noyau (95) traversant les bobines (90), contenant de préférence un élément de blindage magnétique (96) sur le côté externe de la bobine.

26. Mécanisme selon la revendication 25, caractérisé en ce que le conducteur du flux (92) est une cuvette essentiellement fermée.

27. Mécanisme selon l'une quelconque des revendications 1 à 14 et 25 à 26, caractérisé en ce que la première partie (44b) du connecteur à broches contient précisément une bobine (90), l'autre partie (44a) du connecteur à broches contenant plus d'une bobine (90).

28. Mécanisme selon l'une quelconque des revendications 1 à 14 et 25 à 27, caractérisé en ce que deux terminaisons à deux fils (93) partent d'un connecteur à broches (144) et aboutissent dans un autre connecteur à broches (144) (figure 21).

29. Mécanisme selon l'une quelconque des revendications 1 à 14 et 25 à 28, caractérisé en ce que, entre les deux parties du conducteur du flux (92), est disposée une couche d'un matériau amagnétique qui n'est pas conducteur de l'électricité (figure 22).

30. Mécanisme selon l'une quelconque des revendications 1 à 14 et 25 à 29, caractérisé en ce que les deux parties (44a, 44b) du connecteur à broches sont réalisées de manière identique.

31. Charnière pour des portières de véhicules automobiles, caractérisée en ce qu'elle est réalisée pour la transmission sans fil de signaux électriques et/ou de courants, sous forme d'un transformateur dont l'enroulement primaire (56) est un constituant de la première moitié (50) de l'articulation et dont l'enroulement secondaire (66) est un constituant de l'autre moitié (60) de l'articulation.

32. Utilisation d'un raccord multibroches (44) qui transmet des signaux électriques, en particulier des signaux de courant de faible intensité, d'un émetteur à un récepteur via des terminaisons à deux fils (93) qui portent, à leurs extrémités, des bobines (90) qui sont couplées l'une à l'autre via un transformateur dans le raccord multibroches (44) pour le câblage de véhicules automobiles à des endroits dans lesquels on peut utiliser en variante un raccord multibroches qui procure un contact électrique direct.

33. Utilisation d'un raccord multibroches selon la revendication 32, pour le câblage de portières de véhicules automobiles.

34. Utilisation d'un raccord multibroches selon la revendication 32 ou 33, dans un mécanisme muni des caractéristiques selon l'une quelconque des revendications 1 à 30.

Fig. 1

_Fig. 2_

_Fig. 3_

_Fig. 4_

_Fig. 5_

_Fig. 6_

Fig. 8

Fig. 9

Fig. 10

Fig. 11

Fig. 12

Fig. 13

*Fig. 14*

*Fig. 15*

*Fig. 16*

Fig. 7

Fig. 17

Fig. 18

Fig. 19

EP 0 760 990 B1

*Fig. 20*

Sensoren

Aktoren

EP 0 760 990 B1

+UB

97

144

90

93

90

Sensoren

Aktoren

+UB

144

GRND

GRND

*Fig. 21*

EP 0 760 990 B1

_Fig. 22_

91

91

44b

93

93

90

95

92

92

92

101

102

44a

EP 0 760 990 B1

103